# FASCICULE DE BREVET EUROPEEN

(11) **EP 0 946 240 B1**
(45) Date de publication et mention de la délivrance du brevet: **20.03.2002**
(21) Numéro de dépôt: 97945932.8
(22) Date de dépôt: 14.11.1997
(51) Int. Cl.: B01D 19/04

(54) **PROCEDE DE PREPARATION D'EMULSIONS ANTIMOUSSE A BASE DE SILICONE ET D'ALCOOL POLYVINYLIQUE**
VERFAHREN ZUR HERSTELLUNG VON ENTSCHAÜMEREMULSIONEN AUF BASIS VON SILIKONE UND POLYVINYLALKOHOL
METHOD FOR PREPARING ANTI-FOAMING EMULSIONS WITH SILICON AND POLYVINYL ALCOHOL BASE

(30) Priorité: 15.11.1996 FR 9614177
(43) Date de publication de la demande: 06.10.1999
(73) Titulaire: RHODIA CHIMIE, 92408 Courbevoie Cédex (FR)
(72) Inventeur: MILLET, Claude, F-69800 Saint-Priest (FR)
(74) Mandataire: Trolliet, Maurice
(86) Numéro de dépôt international: FR9702054
(87) Numéro de publication internationale: WO9822196

(56) Documents cités:
- GB-A- 903 565
- DATABASE WPI Section Ch, Week 9428 Derwent Publications Ltd., London, GB; Class A26, AN 94-232113 XP002034710 & RO 106 513 B (INST CHIM MACROMOLECULARA PETRU PONI) , 31 mai 1993
- DATABASE WPI Section Ch, Week 6800 Derwent Publications Ltd., London, GB; Class A00, AN 68-27676Q XP002034711 & SU 209 749 A (KIROV TEXTILE INST LENINGRAD)

## Description

La présente invention a trait à un procédé perfectionné de préparation d'émulsions antimousse à base de silicone et d'alcool polyvinylique. Elle concerne également les émulsions ainsi obtenues.

Il existe déjà un grand nombre de formulations antimousse, obtenues à partir d'une charge minérale, le plus souvent des particules de silice, et d'huile silicone adsorbée ou liée physiquement et/ou chimiquement à la charge minérale.

On peut répartir les formulations antimousse en deux grandes catégories, les émulsions aqueuses et les "compounds" dispersables. Ces formulations sont en général préparées par mélange de la charge minérale et de l'huile silicone, par exemple une huile polydiméthylsiloxane, puis chauffage du mélange, par exemple aux environs de 150°C, pour obtenir le "compound" de base. Ce "compound" de base peut être émulsionné avec un mélange d'eau et d'émulsionnant pour donner une émulsion antimousse. Il peut aussi être utilisé tel quel ou éventuellement additionné d'un agent de dispersion ; on parle alors de "compound" dispersable.

De manière générale, les différentes qualités que l'on peut attendre d'une bonne formulation antimousse est d'avoir une bonne efficacité antimousse, une bonne résistance aux forces de cisaillement, une bonne dispersabilité (étalement) sur le milieu et une bonne stabilité au stockage.

Les alcools polyvinyliques (PVA) ont un pouvoir d'étalement important et une bonne tenue aux températures élevées (supérieures à 60°C) et peuvent à ces titres être des candidats pour la mise en oeuvre d'émulsions antimousse.

L'utilisation d'alcool polyvinylique comme agent émulsifiant pour la préparation d'émulsions aqueuses de polyorganosiloxanes, utilisables comme agent antimousse, est connue. On citera en particulier les documents :
- GB-A-0.903.565 où la mise en émulsion est réalisée en coulant la solution aqueuse d'alcool polyvinylique dans un mélange à base d'huile polyorganosiloxane et de charge minérale, pour faire une émulsion de type eau-dans-huile qui est ensuite inversée par broyage pour conduire à une émulsion de type huile-dans-eau ;
- SU-A-0.209.749 où l'on réalise directement une émulsion huile-dans-eau en coulant, en une seule fois, la totalité de la phase silicone dans la solution aqueuse d'alcool polyvinylique.

Les PVA n'ont été toutefois que très peu utilisés industriellement par le passé car ils ne permettent pas d'obtenir une efficacité antimousse équivalente aux autres agents émulsionnants classiquement utilisés. On peut simplement rapporter leur utilisation à la réalisation d'émulsions antimousse destinées à des applications dans lesquelles les capacités d'étalement et de tenue aux températures élevées sont prépondérantes, devant l'efficacité antimousse.

Poursuivant des études dans ce domaine de la technique, la Demanderesse a constaté que la méthode d'émulsification par inversion de phase est difficile à maîtriser dans le cas de l'emploi d'une solution aqueuse d'alcool polyvinylique et qu'il est préférable d'utiliser la méthode directe. La Demanderesse a encore constaté que l'utilisation d'un mélange d'émulsions directes silicone / PVA préparées séparément et ayant des granulométries différentes est un moyen pour commencer à améliorer l'efficacité antimousse de pareilles émulsions.

La présente inention a pour objectif de fournir un procédé permettant de préparer, par application de la méthode directe, des émulsions antimousse à base de silicone et de PVA ayant une efficacité antimousse élevée.

Un autre objectif de l'invention est de fournir un tel procédé permettant d'obtenir des émulsions ayant une efficacité antimousse supérieure à celle procurée par l'utilisation d'un mélange d'émulsions directes silicone / PVA, et au moins équivalente à celle des antimousses silicone classiques tout en ayant des propriétés d'étalement supérieures.

Un autre objectif encore de l'invention est de fournir un tel procédé permettant d'obtenir des émulsions silicone/PVA qui soient stables au stockage et aux températures élevées.

L'invention a donc pour objet un procédé de préparation d'une émulsion antimousse à partir d'une phase antimousse silicone, comprenant au moins une huile polydiorganosiloxane linéaire et au moins une charge minérale, à mettre en émulsion directement dans une phase aqueuse comprenant de l'alcool polyvinylique, caractérisé par les points suivants :
- on introduit la phase antimousse silicone en deux étapes dans la phase aqueuse, le procédé comprenant une première étape consistant à couler sous agitation de 10 à 75 % en poids de la phase antimousse silicone dans la phase aqueuse, puis, après un temps d'agitation, une deuxième étape consistant à couler sous agitation le restant de phase antimousse silicone, cette seconde coulée de phase antimousse silicone étant précédée ou accompagnée d'un ajout d'eau à raison de 1/3 à 2/3 en poids de la quantité d'eau totale intervenant dans le procédé,
- le ratio pondéral alcool polyvinylique / phase antimousse silicone totale est compris entre 0,02 et 0,2,
- la phase antimousse silicone totale représente de 10 à 50 % en poids de l'émulsion antimousse finale, et
- lors de la première étape et éventuellement de la deuxième, on coule la phase antimousse silicone à raison de 100 à 1000 kg/h/m³.

Le procédé selon l'invention, en faisant notamment varier le ratio PVA/eau au cours de la coulée du compound ou phase silicone, permet d'étaler la granulométrie de l'émulsion avec pour résultat l'obtention d'un pouvoir antimousse élevé, supérieur à ce qui serait obtenu par simple mélange d'émulsions préparées séparément et ayant des granulométries différentes.

De préférence, la phase aqueuse comprenant l'alcool polyvinylique aura une viscosité comprise entre 100 et 3000 mPa.s, de préférence entre 500 et 1000 mPa.s.

Les alcools polyvinyliques (PVA) sont, comme cela est parfaitement connu de l'homme du métier, des polymères pouvant avoir des grades ou degrés de condensation variés. Pour une viscosité donnée de la solution aqueuse de PVA, la teneur de celle-ci en PVA pourra donc varier en fonction de la viscosité intrinsèque, liée au degré de condensation, du PVA utilisé.

Les alcools polyvinyliques (APV) sont des composés obtenus indirectement à partir de leur esters, par hydrolyse en milieu aqueux ou par alcoolyse en milieu anhydre. En pratique, les esters utilisés comme matière première sont couramment les acétates de polyvinyles. Généralement, la lyse des esters conduisant aux APV n'est pas complète. Il reste dans la molécule des radicaux acyles dont la proportion influe sur les propriétés de l'APV, notamment sur la solubilité. Un mode de définition des APV repose donc sur l'indication de l'indice d'ester (I.E.) qui est inversement proportionnel au taux d'hydrolyse. La mesure de l'I.E. s'effectue de manière connue en soi, par neutralisation de l'acidité éventuelle de l'alcool polyvinylique, saponification des groupes acyles et titrage de l'excès d'alcalinité.

Les alcools polyvinyliques selon l'invention sont également caractérisés par leur degré de condensation que l'on peut évaluer par la détermination de la viscosité dynamique d'une solution type (désignée par η_{dt} dans le présent exposé), sachant que cette variable est d'autant plus élevée que le degré de condensation est plus grand.

La viscosité η_{dt} correspond au coefficient de viscosité dynamique d'une solution aqueuse d'APV à 4 %, mesuré à une température de 20 ± 5°C à l'aide d'un viscosimètre d'Ostwald.

On peut notamment utiliser des PVA ayant un I.E. compris entre 5 et 160, de préférence entre 80 et 150, et une viscosité η_{dt} compris entre 2 et 100 mPa.s, de préférence entre 20 et 80 mPa.s.

Avec un PVA du type Rhodoviol de Rhône-Poulenc Chimie de viscosité 25 et d'indice d'ester 140, la solution aqueuse de PVA pourra notamment en comprendre entre 5 et 20 % en poids, de préférence entre 8 et 12, plus particulièrement de l'ordre de 10 %.

Le ratio pondéral PVA/phase silicone totale sera de préférence compris entre 0,05 et 0,16.

De manière préférée, la phase silicone représentera de 15 à 30 %, en poids de l'émulsion antimousse finale.

La coulée de la phase silicone se fait comme indiqué ci-avant en deux étapes.

Dans la première, on préférera couler de 20 à 60 % de la phase silicone, dans la solution aqueuse de PVA. De manière pratique, mais pas exclusivement lors de cette coulée, la solution aqueuse de PVA sera mise en agitation notamment à l'aide d'une turbine à grande vitesse.

La coulée de la phase silicone sera de préférence progressive, à raison, de préférence, de 200 à 600 kg/heure/m³.

L'agitation du mélange obtenu sera maintenue jusqu'à l'obtention de la granulométrie visée.

Le reste de la phase silicone sera coulé lors de la deuxième étape, le mélange obtenu précédemment étant maintenu sous agitation. La vitesse de coulée pourra être dans les mêmes limites que pour la première étape et notamment du même ordre.

Suivant une modalité préférée de l'invention, l'eau sera ajoutée en même temps que le reste de la phase silicone, avantageusement de manière progressive pendant toute la durée de la coulée de cette phase.

L'eau pourra être ajoutée à raison, de préférence, de l'ordre de 1/2 (en poids) de la quantité d'eau totale intervenant dans le procédé.

Les huiles polydiorganosiloxanes entrant dans la composition des antimousses selon l'invention répondent à la formule (I) suivante :

[(R¹)₃SiO]―[R²R⁴SiO]ₓ―[(R³)₂SiO]_{y}―[(R¹)₃SiO]

dans laquelle
- les radicaux R¹ sont identiques ou différents entre eux et représentent : un alkyle ou un alcényle, en C₁-C₁₀ linéaire ou ramifié ; un aryle, un aralkyle, un alkylaryle, un alcénylaryle ou un aralcényle, en C₅-C₈ pour la partie aryle et en C₁-C₄ pour la partie alkyle ou alcényle ; avec la possibilité aussi que l'un des radicaux R¹ d'un ou des deux motifs terminaux soit un hydroxyle ;
- les radicaux R², R³, R⁴ sont identiques ou différents entre eux et représentent : un alkyle ou un alcényle, en C₁-C₁₀ linéaire ou ramifié ; un aryle, un aralkyle, un alkylaryle, un aralcényle ou un alcénylaryle en C₅-C₈ pour la partie aryle et en C₁-C₄ pour la partie alkyle ou alcényle,
ces radicaux étant éventuellement substitués ;
x et y sont des nombres égaux ou supérieurs à 0 avec la condition que la somme x + y représente un nombre choisi pour assurer la viscosité souhaitée, comprise dans les intervalles cités par ailleurs.
l'huile polydiorganosiloxane ou le mélange d'huiles polydiorganosiloxanes a de préférence une viscosité comprise entre 20 et 100 000 mPa.s, plus préférentiellement entre 50 et 30 000, ou même entre 100 et 10 000 mPa.s, à 25°C (viscosité dynamique mesurée à 25°C à l'aide du viscosimètre Brookfield selon la norme AFNOR NFT 76102 de mai 1982).

Les radicaux R¹ plus particulièrement sélectionnés en pratique sont les radicaux alkyles tels que méthyles, éthyles, et les radicaux vinyles, phényles ou hydroxyles, les radicaux alkyles, notamment méthyles, étant tout de même plus spécialement préférés.

S'agissant des radicaux R², R³, R⁴, on privilégie les radicaux méthyles, éthyles, propyles, vinyles, phényles, sachant que selon un mode préférentiel de mise en oeuvre de l'invention au moins 80 % des radicaux R², R³ et R⁴ sont des radicaux méthyles.

A titre d'exemple préféré, on peut citer :

(CH₃)₃SiO[(CH₃)₂SiO]_{z}Si(CH₃)₃

avec z représentant un nombre de valeur suffisante pour assurer une viscosité comprise dans les intervalles de viscosité définis par ailleurs.

La charge minérale est préférentiellement de la silice.

Il peut s'agir de silice de précipitation ou de silice de combustion, traitée ou non.

La silice de précipitation est de préférence préhydrophobée par traitement classique par un ou des composés organosiliciques. Elle peut être incorporée non traitée, puis traitée (hydrophobée) in situ par un ou des composés organosiliciques. Parmi ces composés figurent les méthylpolysiloxanes tels que l'hexaméthyldisiloxane, l'octaméthylcyclotétrasiloxane, les méthylpolysilazanes tels que l'hexaméthyldisilazane, l'hexaméthycyclotrisilazane, les chlorosilanes tels que le diméthyldichlorosilane, le triméthylchlorosilane, le méthylvinyldichlorosilane, le diméthylvinylchlorosilane, les alcoxysilanes tels que le diméthyldiméthoxysilane. Lors de ce traitement, les silices peuvent accroître leur poids de départ jusqu'à un taux de 20 %.

La silice de combustion peut être utilisée non traitée. Si besoin est, on peut cependant la traiter comme la silice de précipitation.

On peut aussi utiliser en sus ou à la place des charges siliceuses d'autres charges minérales telles que quartz broyé, argiles calcinées et terres de diatomées.

Les charges minérales ont généralement une surface spécifique, mesurée selon les méthodes BET, d'au moins 10 m²/g, notamment comprise entre 20 et 300 m²/g.

La préparation du "compound" de base (huile silicone + charge) peut comprendre, de manière usuelle, le mélange des deux composants, puis le chauffage du mélange obtenu entre 60 et 200°C, notamment aux alentours de 150°C, de préférence sous pression réduite. Ce traitement thermique, notamment lorsqu'il est réalisé à une température supérieure à 100°-150°C, conduit aussi à hydrophober in situ la charge minérale, si bien qu'un tel traitement à température élevée peut se substituer à un traitement par les composés organosiliciques.

Dans le compound de base ou phase silicone, le rapport pondéral huile/charge peut être compris entre 2 et 30 et de préférence entre 5 et 20.

La viscosité du "compound" de base pourra être comprise entre 30 et 60 000 mPa.s, de préférence entre 100 et 40 000 mPa.s, à 25°C. La viscosité pourra être atteinte par le mélange d'huiles de viscosités différentes. Il s'agit ici d'une viscosité dynamique à 25°C, mesurée à l'aide d'un viscosimètre Brookfield selon les indications de la norme AFNOR précitée, en utilisant un rotor n° 6 tournant à la vitesse de 5 tr/min.

Entrera aussi dans le cadre de la présente invention l'incorporation d'un tensioactif supplémentaire autre que le PVA, en quantité minoritaire par rapport à ce dernier. On pourra notamment utiliser des esters de triglycérides, leurs homologues éthoxylés, des copolymères silicone/polyéther ou encore des mélanges de ces composés. S'il est présent un tel tensioactif supplémentaire pourra notamment être incorporé à raison de 1 à 60 % de la quantité de PVA, plus particulièrement de 5 à 40 %.

Les copolymères silicone-polyéther peuvent être issus de la réaction d'un polyéther de formule :

CH₂ = CH-CH₂[OCH₂CH₂]ᵥ-[OCH₂CH(CH₃)]_{w}-OH

sur une huile silicone de formule :

Me₃SiO(Me₂SiO)ₓ(MeHSiO)_{y}SiMe₃, Me = méthyle

avec v et w différents de 0 et notamment compris entre 5 et 30
avec x allant de 20 à 150
avec y allant de 2 à 10.

Le copolymère peut être additionné d'un additif tel qu'un polyéther libre, par exemple en proportion pondérale allant de 40/60 à 60/40, de préférence de l'ordre de 50/50.

Les moyens d'agitation utilisés dans le procédé de l'invention pourront être les moyens d'émulsification usuels, tels que des turbines, permettant des vitesses de rotation élevées.

On choisira de préférence les moyens à multiple agitation, c'est-à-dire présentant simultanément plusieurs moyens ou modes d'agitation, en particulier combinaison de turbine et agitation par racle et pale, assurant des fonctions d'agitation rapide et de broyage.

Après la deuxième étape de coulée, on maintiendra de préférence l'agitation jusqu'à l'obtention du profil de granulométrie souhaité.

L'invention a encore pour objet des émulsions antimousse susceptibles d'être obtenues par la mise en oeuvre de ce procédé. Les émulsions se caractérisent essentiellement par leurs propriétés antimousse et par leur granulométrie étalée.

L'invention va être maintenant décrite plus en détail à l'aide de modes de réalisation pris à titres d'exemples non limitatifs.

### Exemple 1 : phase silicone ou compound antimousse

**1.1** - huile polydiméthylsiloxane α,ω-triméthylsilyle de viscosité 100 mPa.s chargée à 5 % P/P de silice 200 m²/g.
**1.2** - huile polydiméthylsiloxane α,ω-triméthylsilyle de viscosité 1000 mPa. s
   + silice 300 m²/g, 5 % P/P
   + huile polydiméthylsiloxane α,ω-dihydroxy de viscosité 50 mPa.s, 5 % P/P

### Exemple 2 : essai comparatif

Cet essai est destiné à comparer l'efficacité antimousse entre un mélange de deux émulsions de granulométries différentes et une émulsion obtenue selon le procédé conforme à l'invention.
**2.1.** - Mélange direct de 2 émulsions de compound 1.1. ayant les spécificités suivantes :

| | | |
|---|---|---|
| rapport PVA /eau | 0,06 | 0,11 |
| granulométrie φ moyen | 5,5 | 3,37 |
| φ médian | 5,06 | 3,39 |
| écart-type | 2,8 | 1,37 |

mélange à 50/50 en poids des émulsions, sous agitation douce.
Le PVA mis en oeuvre est le produit de marque déposée Rhodoviol de Rhône Poulenc Chimie ayant un I.E. de 140 et une viscosité η_{dt} (Rhodoviol 25/140).
**2.2**. - Préparation de l'émulsion selon l'invention :
Couler 50 % de la quantité de compound antimousse (exemple **1.1.**) dans la solution à 10 % d'alcool polyvinylique (Rhodoviol 25/140). Mettre sous agitation intense (agitation à triple effet: racle, pale, turbine: Pressindustria) et attendre que la granulométrie soit stable (φ moyen = 2 µm). Ajouter simultanément le complément de compound antimousse et l'eau qui permet de diluer l'émulsion jusqu'à atteindre l'extrait sec souhaité.
∗ PVA/eau initial 0,11
∗ PVA/eau final 0,06

Le diamètre moyen de l'émulsion atteint 4 µm ; parallèlement, l'écart-type de la population des gouttes croît de 1 à 3 µm.
**2.3** - Le tableau ci-dessous résume les résultats obtenus selon que l'on mélange les deux émulsions de granulométries différentes ou que l'on prépare directement l'émulsion selon le procédé décrit.

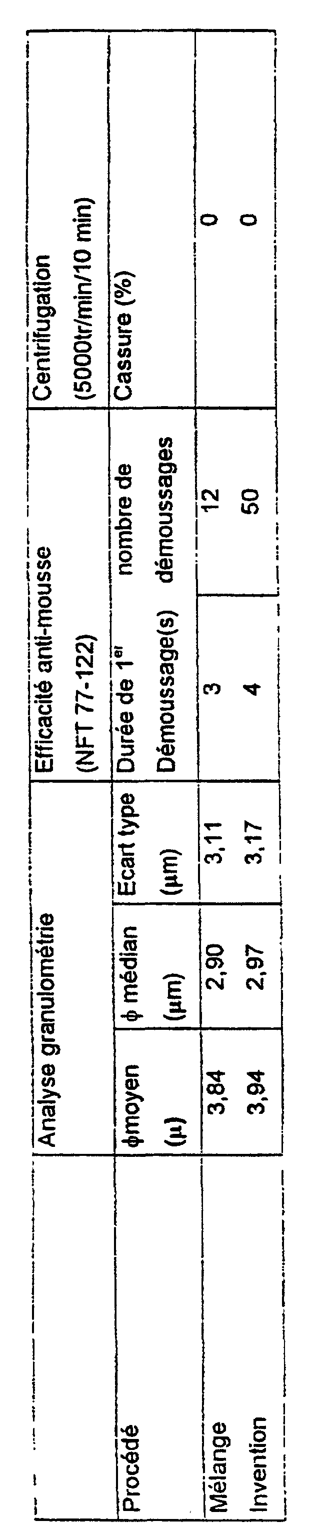

### Exemple 3 : autres émulsions selon l'invention

3.1 - Appareillage
PRESSINDUSTRIA 80 I (TE 3-50) avec turbune + racle et pale.
Pompe doseuse pour coulée de :
. compound antimousse (exemple 1.1)
. eau procédé

3.2 - Formulation en g/kg
- Solution de PVA (Rhodoviol 25/140 Rhône Poulenc Chimie) à 10 % en poids 354,4
- 1^{ere} partie compound antimousse (1.1) 67,4 (a) ou 134,8 (b)
- Eau Procédé 376
- 2^{eme} partie compound antimousse (1.1) 202,2 (a) ou 134,8 (b)

3.3. - Consignes d'exécution
- Charger la solution de PVA à 10 %
- Agiter à 25 tours/minute (pale + racle)
- Mettre la turbine en service à 1500 tours/minute
- Couler la première partie de compound à 14 kg/heure
- Maintenir un palier de 60 minutes
- Couler en parallèle :
   . la deuxième partie de compound à 15 kg/heure
   . l'eau procédé pendant la même durée
- Maintenir un palier de 15 minutes
- Arrêter l'agitation
- Filtrer sur cartouche 125 microns

3.4 - Granulométrie des prélèvements intermédiaires (après la coulée de la première partie du Compound et 1 heure de turbinage à 1500 tours/minute).

| Rapport compound 1^{ère} partie/2^{ème} partie | (b) 50/50 | (a) 25/75 |
|---|---|---|
| Diamètre moyen (µm) | 2,565 | 2,638 |
| Diamètre médian (µm) | 2,294 | 2,244 |
| Ecart type (µm) | 1,38 | 1,66 |

La diminution du diamètre moyen lorsque le ratio 1^{ere}/2^{eme} partie augmente est liée à l'augmentation de viscosité du mélange.
3.5 - contrôle des produits finis.

| | (b) 50/50 | (a) 25/75 |
|---|---|---|
| Centrifugation (%) 20 min/3000 tr/min | 0 | 0 |
| Temps 1^{er} démoussage | 12 | 10 |
| Nombre de démoussages | 38 | 50 |
| Granulométrie | | |
| Phi moyen (µm) | 4,043 | 4,967 |
| Phi médian (µm) | 3,302 | 4,267 |
| Ecart type (µm) | 2,88 | 3,49 |

### Exemple 4 : autres émulsions selon l'invention avec tensioactif supplémentaire:

4.1. - Appareillage
   PRESSINDUSTRIA de 80 l avec turbine + pale et racle.
   Pompe doseuse pour charger le compound :
   . antimousse (exemple 1.2) et
   . l'eau procédé
4.2 - Formulation en g/kg
   Solution Rhodoviol 25/140 à 10 % en poids 400.0
   CrilI 3 (monostéarate de sorbitan) 15,0
   Compound antimousse (1.2) - 1^{ere} partie 70.5 (a) ou 141,0 (b)
   Compound antimousse (1.2) - 2^{ème} partie 211,5 (a) ou 141,0 (b)
   Eau procédé 303,0
4.3 - Consignes d'exécution
   - Charger la solution de Rhodoviol à 10 %
   - Agiter à 50 tr/min (pale et racle)
   - Mettre la turbine en service à 1500 tr/min
   - Chauffer à 60 °C
   - Charger le Crill 3 en 10 min
   - Maintenir un palier d'agitation de 15 min
   - Refroidir à 40°C
   - Couler la première partie de compound à 15 kg/h
   - Maintenir un palier d'agitation de 60 min
   - Maintenir la vitesse de la turbine à 1500 tr/min
   - Couler en parallèle :
      . la deuxième partie de compound à 15 kg/h
      . l'eau procédé soit à 18 kg/h
         soit à 27 kg/h
   - Maintenir un palier d'agitation de 15 min
   - Arrêter la turbine
   - Refroidir le formol à 30 %
   - Filtrer sur cartouche 125 microns

En suivant les spécifications de cet exemple, on a obtenu les moyennes et données suivantes sur 8 essais :
- temps 1^{er} démoussage : 8,8 s
- nombre de démoussages : 50
- granulométrie
   . Phi moyen : 26,6 µm (de 19,61 à 36,81 µm)
   . Phi médian : 14,7 µm (de 9,46 à 20,92 µm)
   . S.D. : 42,5 µm (de 20,06 à 80,9 µm)

## Revendications

1. Procédé de préparation d'une émulsion antimousse à partir d'une phase antimousse silicone, comprenant au moins une huile polydiorganosiloxane linéaire et au moins une charge minérale, à mettre en émulsion dans une phase aqueuse comprenant de l'alcool polyvinylique, **caractérisé par** les points suivants :
• on introduit la phase antimousse silicone en deux étapes dans la phase aqueuse, le procédé comprenant une première étape consistant à couler sous agitation de 10 à 75 % en poids de la phase antimousse silicone dans la phase aqueuse, puis, après un temps d'agitation, une deuxième étape consistant à couler sous agitation le restant de phase antimousse silicone, cette seconde coulée de phase antimousse silicone étant précédée ou accompagnée d'un ajout d'eau à raison de 1/3 à 2/3 en poids de la quantité d'eau totale intervenant dans le procédé,
• le ratio pondéral alcool polyvinylique / phase antimousse silicone totale est compris entre 0,02 et 0,2,
• la phase antimousse silicone totale représente de 10 à 50 % en poids de l'émulsion antimousse finale, et
• lors de la première étape et éventuellement de la deuxième, on coule la phase antimousse silicone à raison de 100 à 1000 kg/h/m³.

2. Procédé selon la revendication 1, **caractérisé en ce que** la phase aqueuse comprenant de l'alcool polyvinylique a une viscosité comprise entre 100 et 3000 mPa.s.

3. Procédé selon la revendication 1 ou 2, **caractérisé en ce que** le ratio pondéral alcool polyvinylique/phase silicone totale est compris 0,05 et 0,16.

4. Procédé selon l'une des revendications 1 à 3, **caractérisé en ce que** la phase antimousse silicone représente de 15 à 30 % en poids de l'émulsion antimousse finale.

5. Procédé selon l'une des revendications 1 à 4, **caractérisé en ce que** lors, de la première étape, on coule de 20 à 60 % de la phase antimousse silicone.

6. Procédé selon l'une quelconque des revendications 1 à 5, **caractérisé en ce que**, lors de la deuxième étape, on ajoute de l'eau à raison de l'ordre de 1/2 de la quantité d'eau totale intervenant dans le procédé.

7. Procédé selon l'une quelconque des revendications 1 à 6, **caractérisé en ce que**, lors de la deuxième étape, on coule en parallèle la phase antimousse silicone et l'eau.

8. Procédé selon l'une quelconque des revendications 1 à 7, **caractérisé en ce que**, lors de la première étape et éventuellement de la deuxième, on coule la phase antimousse silicone à raison de 200 à 600 kg/h/m³.

9. Procédé selon l'une des revendications 1 à 8, **caractérisé en ce que** l'huile ou le mélange d'huiles polydiorganosiloxane présente une viscosité de 20 à 100 000 mPa.s.

10. Procédé selon l'une quelconque des revendications 1 à 9, **caractérisé en ce que** la viscosité de la phase antimousse silicone est comprise entre 30 et 60 000.

## Patentansprüche

1. Verfahren zur Herstellung einer Entschäumeremulsion aus einer Silikonentschäumerphase, die wenigstens ein lineares Polydiorganosiloxanöl und wenigstens einen mineralischen Füllstoff umfasst, die in einer wässrigen Phase, die Polyvinylalkohol enthält, emulgiert werden soll, **gekennzeichnet durch** die folgenden Punkte:
• man gibt die Silikonentschäumerphase in zwei Schritten zu der wässrigen Phase hinzu, wobei das Verfahren einen ersten Schritt umfasst, der darin besteht, unter Rühren 10 bis 75 Gew.-% der Silikonentschäumerphase in die wässrige Phase zu gießen, dann, nach einer Zeit des Rührens, einen zweiten Schritt, der darin besteht, unter Rühren die restliche Silikonentschäumerphase zuzugießen, wobei diesem zweiten Zugießen von Silikonentschäumerphase eine Zugabe von Wasser in einer Menge von 1/3 bis 2/3 des Gewichts der Gesamtwassermenge, die in das Verfahren eingeht, vorausgeht oder es begleitet,
• das Gewichtsverhältnis Polyvinylalkohol/gesamte Silikonentschäumerphase liegt zwischen 0,02 und 0,2,
• die gesamte Silikonentschäumerphase stellt 10 bis 50 Gew.-% der endgültigen Entschäumeremulsion dar und
• beim ersten Schritt und gegebenenfalls beim zweiten wird die Silikonentschäumerphase in einer Menge von 100 bis 1000 kg/h/m³ zugegossen.

2. Verfahren gemäß Anspruch 1, **dadurch gekennzeichnet, dass** die wässrige Phase, die Polyvinylalkohol enthält, eine Viskosität zwischen 100 und 3000 mPa·s hat.

3. Verfahren gemäß Anspruch 1 oder 2, **dadurch gekennzeichnet, dass** das Gewichtsverhältnis Polyvinylalkohol/gesamte Silikonphase zwischen 0,05 und 0,16 liegt.

4. Verfahren gemäß einem der Ansprüche 1 bis 3, **dadurch gekennzeichnet, dass** die Silikonentschäumerphase 15 bis 30 Gew.-% der endgültigen Entschäumeremulsion darstellt.

5. Verfahren gemäß einem der Ansprüche 1 bis 4, **dadurch gekennzeichnet, dass** man beim ersten Schritt 20 bis 60% der Silikonentschäumerphase zugießt.

6. Verfahren gemäß einem der Ansprüche 1 bis 5, **dadurch gekennzeichnet, dass** man beim zweiten Schritt Wasser in einer Menge in der Größenordnung von ½ der Gesamtwassermenge, die in das Verfahren eingeht, zugibt.

7. Verfahren gemäß einem der Ansprüche 1 bis 6, **dadurch gekennzeichnet, dass** man beim zweiten Schritt die Silikonentschäumerphase und das Wasser parallel zugießt.

8. Verfahren gemäß einem der Ansprüche 1 bis 7, **dadurch gekennzeichnet, dass** man beim ersten Schritt und gegebenenfalls beim zweiten die Silikonentschäumerphase in einer Menge von 200 bis 600 kg/h/m³ zugießt.

9. Verfahren gemäß einem der Ansprüche 1 bis 8, **dadurch gekennzeichnet, dass** das Polydiorganosiloxanöl oder -ölgemisch eine Viskosität von 20 bis 100 000 mPa·s aufweist.

10. Verfahren gemäß einem der Ansprüche 1 bis 9, **dadurch gekennzeichnet, dass** die Viskosität der Silikonentschäumerphase zwischen 30 und 60 000 liegt.

## Claims

1. Process for producing an antifoaming emulsion from a silicone antifoaming phase, comprising at least one linear polydiorganosiloxane oil and at least one mineral filler, in emulsifying it in an aqueous phase which includes polyvinyl alcohol, **characterized by** the following points:
• the silicone antifoaming phase is introduced into the aqueous phase in two steps, the process comprising a first step consisting in pouring, with stirring, from 10 to 75% by weight of the silicone antifoaming phase into the aqueous phase and then, after a period of stirring, a second step consisting in pouring, with stirring, the remainder of the silicone antifoaming phase, this second pouring of silicone antifoaming phase being preceded or accompanied by an addition of water in a ratio of from 1/3 to 2/3 by weight of the total amount of water involved in the process;
• the polyvinyl alcohol/total silicone antifoaming phase weight ratio is between 0.02 and 0.2;
• the total silicone antifoaming phase represents from 10 to 50% by weight of the final antifoaming emulsion; and
• during the first step and possibly the second, the silicone antifoaming phase is poured in in an amount from 100 to 1000 kg/h/m³.

2. Process according to claim 1, **characterized in that** the aqueous phase including polyvinyl alcohol has a viscosity of between 100 and 3000 mPa.s.

3. Process according to claim 1 or 2, **characterized in that** the polyvinyl alcohol/total silicone phase weight ratio is between 0.05 and 0.16.

4. Process according to one of claims 1 to 3, **characterized in that** the silicone antifoaming phase represents from 15 to 30% by weight of the final antifoaming emulsion.

5. Process according to one of claims 1 to 4, **characterized in that**, during the first step, from 20 to 60% of the silicone antifoaming phase is poured in.

6. Process according to any one of claims 1 to 5, **characterized in that**, during the second step, water is added in a ratio of the order of 1/2 of the total amount of water involved in the process.

7. Process according to any one of claims 1 to 6, **characterized in that**, during the second step, the silicone antifoaming phase and the water are poured in at the same time.

8. Process according to any one of claims 1 to 7, **characterized in that**, during the first step and possibly the second, the silicone antifoaming phase is poured in in an amount from 200 to 600 kg/h/m³.

9. Process according to one of claims 1 to 8, **characterized in that** the polydiorganosiloxane oil or oil mixture has a viscosity of from 20 to 100 000 mPa.s.

10. Process according to any one of claims 1 to 9, **characterized in that** the viscosity of the silicone antifoaming phase is between 30 and 60 000.
